# EUROPEAN PATENT APPLICATION

(11) **EP 4 683 072 A1**
(43) Date of publication of application: **21.01.2026**
(21) Application number: 24770781.3
(22) Date of filing: 08.03.2024
(51) Int. Cl.: H01M 50/244, H02J 7/00

(54) **HOLDING DEVICE**

(30) Priority: 14.03.2023 JP 2023039314
(71) Applicant: HONDA MOTOR CO., LTD., Tokyo 105-8404 (JP)
(72) Inventor: HIRANUMA Junji, Wako-shi, Saitama 351-0193 (JP); GODA Ryuki, Wako-shi, Saitama 351-0193 (JP)
(74) Representative: Weickmann & Weickmann PartmbB
(86) International application number: PCT/JP2024/009067
(87) International publication number: WO 2024/190675

(57) **Abstract**

A holding apparatus (1) includes a holding portion (2) including a first portion (31) and a second portion (32), the first portion holding a first surface of a storage device, the first surface facing a first direction, the second portion holding a second surface of the storage device, the second surface facing a second direction which intersects the first direction, the holding portion holding the storage device to be detachable. The holding apparatus (1) includes a reinforcement portion (400) at a surface (31b) of the first portion (31), the surface (31b) being located opposite to a surface that faces the storage device, the reinforcement portion (400) being constituted of a second material having higher strength and/or rigidity than a first material which constitutes the holding portion (2).

## Description

### TECHNICAL FIELD

The present invention relates to a holding apparatus.

Priority is claimed on Japanese Patent Application No. 2023-039314, filed March 14, 2023, the content of which is incorporated herein by reference.

### BACKGROUND ART

For example, Patent Document 1 discloses a charger including a tray on which a battery is placed. The tray includes a bottom surface portion formed along a length direction of the battery in a state of being placed on the charger, and a receiving surface portion that receives a bottom portion of the battery. The lower surface of the battery abuts the upper surface of the bottom surface portion, when the battery is accommodated.

### Citation List

### Patent Document

Patent Document 1: PCT International Publication No. WO 2021/059685

### SUMMARY OF INVENTION

### Technical Problem

The bottom surface portion is a part that receives a load, when the battery is inserted, and may be deformed or damaged, when a predetermined load or more is applied. Hence, there is a demand for enhancing durability against the load applied when the storage device is inserted.

In order to solve the above problem, an object of the present application is to enhance durability against the load applied when the storage device is inserted.

### Solution to Problem

As a means for solving the above problem, according to aspects of the present invention, following constitutions are included.
(1) A holding apparatus (for example, a holding apparatus 1 in an embodiment) according to one aspect of the present invention includes a holding portion (for example, a holding portion 2 in an embodiment), the holding portion including a first portion (for example, a first portion 31 in an embodiment) and a second portion (for example, a second portion 32 in an embodiment), the first portion holding a first surface (for example, a lower surface 12 in an embodiment) of a storage device (for example, a storage device 10 in an embodiment), the first surface facing a first direction, the second portion holding a second surface (for example, a rear surface 16 in an embodiment) of the storage device, the second surface facing a second direction which intersects the first direction, the holding portion holding the storage device to be detachable, in which the holding apparatus includes a reinforcement portion (for example, a reinforcement portion 400 in an embodiment) at a surface (for example, a lower surface 31b in an embodiment) of the first portion, the surface being located opposite to a surface which faces the storage device, the reinforcement portion being constituted of a second material having higher strength and/or rigidity than a first material which constitutes the holding portion.
(2) In the holding apparatus described in the above (1), the reinforcement portion may be fixed to the surface of the first portion, the surface being located opposite side.
(3) The holding apparatus described in the above (1) or (2) may further include: a power conversion device (for example, a power conversion device 81 in an embodiment) and/or a control device (for example, a control device 82 in an embodiment), the power conversion device being provided to be capable of supplying electric power to and from the storage device held by the holding portion, the control device controlling the power conversion device; and a support portion (for example, a support portion 420 in an embodiment) provided to extend along the reinforcement portion, in which the power conversion device and/or the control device may be fixed to a downward-facing surface (for example, a downward-facing surface 421a in an embodiment) of the support portion.
(4) The holding apparatus described in the above (3) may further include a shield portion (for example, a shield portion 430 in an embodiment) between the support portion and the holding portion, the shield portion being constituted of a fourth material having lower electromagnetic wave transmission property than a third material which constitutes the support portion.
(5) In the holding apparatus described in one of the above (1) to (4), the reinforcement portion may be disposed to define a space (for example, a gap 405 in an embodiment) from the surface of the first portion, the surface being located opposite side. Advantageous Effects of Invention

According to the holding apparatus described in the above (1) of the present invention, the reinforcement portion constituted of the second material having higher strength and/or rigidity than the first material that constitutes the holding portion is provided at the surface of the first portion, the surface being located opposite to the surface that faces the storage device, so that the strength and/or rigidity of the first portion that holds the first surface of the storage device can be enhanced. Therefore, durability against the load applied when the storage device is inserted can be enhanced.

According to the holding apparatus described in the above (2) of the present invention, the strength and/or rigidity of the first portion can be enhanced also at the fixing part of the reinforcement portion to a surface of the first portion, the surface being located opposite to the surface that faces the storage device. Therefore, the durability against the load applied when the storage device is inserted can be further enhanced.

According to the holding apparatus described in the above (3) of the present invention, the strength and/or rigidity of the first portion can be enhanced by a layered structure of the reinforcement portion and the support portion. Therefore, the durability against the load applied when the storage device is inserted can be further enhanced. In addition, the power conversion device and/or the control device is fixed to the downward-facing surface of the support portion, thereby eliminating the need to provide a fixing part on the bottom portion of the holding apparatus. Therefore, the degree of freedom in designing the bottom portion of the holding apparatus can be improved.

According to the holding apparatus described in the above (4) of the present invention, the strength and/or rigidity of the first portion can be enhanced by a layered structure of the reinforcement portion, the support portion, and the shield portion. Therefore, the durability against the load applied when the storage device is inserted can be further enhanced. In addition, the shield portion is capable of suppressing diffusion of the electromagnetic waves generated from the power conversion device and/or the control device to the outside of the holding apparatus.

According to the holding apparatus described in the above (5) of the present invention, the reinforcement portion is disposed to define a space from the surface of the first portion, the surface being located opposite to the surface that faces the storage device. Thus, it becomes possible to suppress deformation of the first portion by equal to or larger than the space.

In addition, as compared with the case where the reinforcement portion is disposed in contact with the surface of the first portion, the surface being located opposite to the surface that faces the storage device from the beginning, it becomes possible to suppress the generation of contact sound between two members, vibrations of the reinforcement portion, or the like, when using normally (the load smaller than a predetermined one).

### BRIEF DESCRIPTION OF DRAWINGS

[FIG. 1] A perspective view of a holding apparatus according to an embodiment.
[FIG. 2] A perspective view of the holding apparatus according to an embodiment when viewed from a rear lower side.
[FIG. 3] A front view of the holding apparatus according to an embodiment.
[FIG. 4] A front view of a state in which the holding apparatus according to an embodiment holds a storage device.
[FIG. 5] A side view of a state in which the holding apparatus according to an embodiment holds the storage device.
[FIG. 6] A cross-sectional view taken along line VI-VI of FIG. 3.
[FIG. 7] A view illustrating a fixing part of a reinforcement portion according to an embodiment.
[FIG. 8] A view showing a fixing part of a support portion according to an embodiment.
[FIG. 9] A view showing a fixing part of the shield portion according to an embodiment.

### DESCRIPTION OF EMBODIMENTS

Hereinafter, embodiments of the present invention will be described with reference to the drawings. In the following description, as an example of a holding device, description will be made with regard to a storage device holding device that holds a storage battery (a secondary battery) to be detachable, such as a battery as a storage device. Detachable encompasses attachable and detachable. Out of detachable modes, the holding device according to an embodiment has a detachable mode that does not necessitate a separate tool or the like for attachment or detachment. In the following description, expressions indicating relative or absolute arrangements, for example, "parallel", "orthogonal", "center", and "coaxial" not only strictly mean such arrangements but also include a state of being relatively displaced with a tolerance or an angle or a distance at which the same function is obtainable. In the drawings for use in the following description, the scale of each member is appropriately changed in order to make each member recognizable in size.

### <Holding Apparatus>

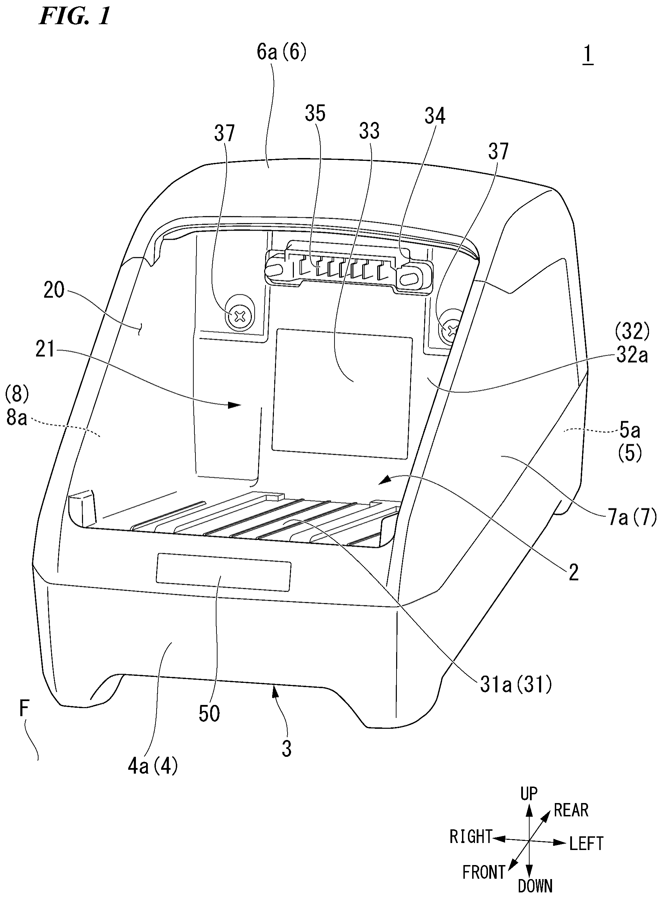

In FIGS. 1 to 6, a holding apparatus 1 includes: a holding portion 2, which holds a storage device 10 to be detachable; a bottom portion 3, which faces a placement surface F when the holding apparatus 1 is placed; a front portion 4 having a front surface 4a, which faces a front side of the holding apparatus 1; a rear portion 5 having a rear surface 5a, which faces a rear side of the holding apparatus 1; an upper portion 6 having an upper surface 6a, which faces an upper side of the holding apparatus 1; a left side portion 7 having a left surface 7a, which faces a left side of the holding apparatus 1; and a right side portion 8 having a right surface 8a, which faces a right side of the holding apparatus 1. In an embodiment, the placement surface F, on which the holding apparatus 1 is placed, is a flat ground or a floor surface (a horizontal surface). In the following description, three axial directions orthogonal to one another as illustrated in the drawings are defined as a front-rear direction, a left-right direction, and an up-down direction. The up-down direction will also be referred to as a vertical direction. A down side in the up-down direction corresponds to a gravity direction.

An opening portion 20 is formed in the holding apparatus 1 from the front portion 4 to the upper portion 6. An accommodation space 21 having a shape that conforms to an outer shape of the storage device 10 is formed inside the holding apparatus 1 through the opening portion 20. The accommodation space 21 is recessed from the upper portion 6 of the holding apparatus 1. The accommodation space 21 is made up of a plurality of surfaces (specifically, a bottom surface (an upper surface 31a of a first portion 31) and three side surfaces (inner side surfaces of the left and right side portions 7 and 8 and a front surface 32a of a second portion 32) that rise from left and right edge portions and a rear end portion of the bottom surface. Note that at least one of the three side surfaces may not necessarily be a flat surface.

The left side portion 7 and the right side portion 8 are formed so that upper ends are inclined to be higher from the front side toward the rear side (to be inclined rearward and upward). The length in the up-down direction of the accommodation space 21 also increases from the front side toward the rear side, and the rear side has the maximum length.

### <Storage Device>

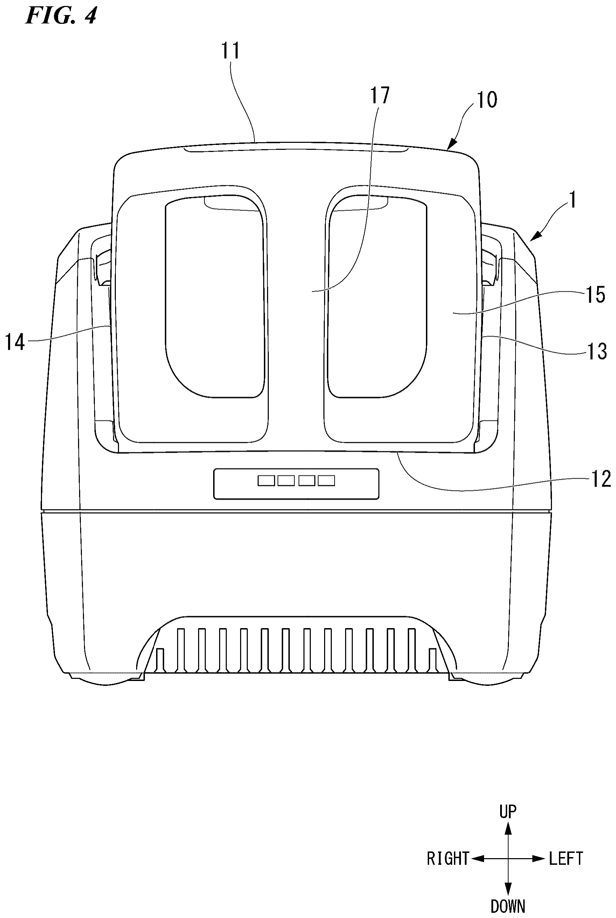

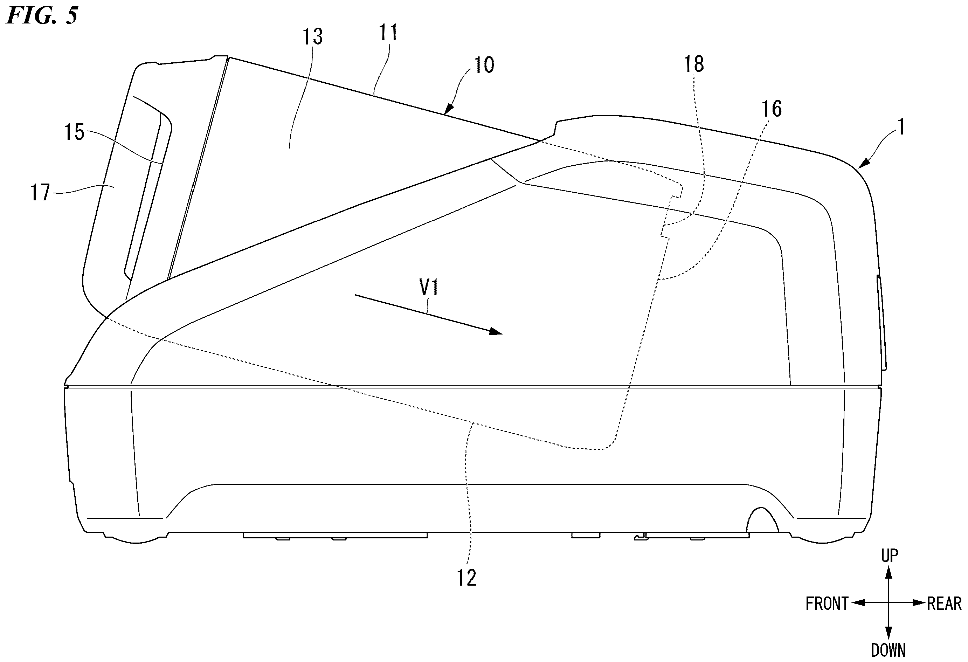

In FIGS. 4 and 5, the storage device 10 is constituted to be one unit of a single battery pack. For example, the storage device 10 is a lithium-ion battery. For example, it is possible to use the storage device 10 as a power source of a traveling motor mounted on a two-wheeled or four-wheeled electric vehicle. Note that the storage device 10 is not limited to the above description, and can be used for various applications. For example, the storage device 10 may be applied to an electric instrument other than the electric vehicles.

The storage device 10 has a substantially rectangular parallelepiped shape as a whole. Hereinafter, the respective surfaces of the storage device 10 are defined as an upper surface 11, a lower surface 12, a left surface 13, a right surface 14, a front surface 15, and a rear surface 16 with an accommodated state of the storage device 10 in the holding apparatus 1 as a reference. The length in the left-right direction of the storage device 10 is substantially the same as the length in the left-right direction of the accommodation space 21. The length in the up-down direction of the storage device 10 is substantially the same as the maximum length in the up-down direction of the accommodation space 21. The length in the front-rear direction of the storage device 10 is substantially the same as the maximum length in the front-rear direction of the accommodation space 21.

The storage device 10 is accommodated in the accommodation space 21 through the opening portion 20. In the accommodated state of the storage device 10, the upper surface 11 and the front surface 15 of the storage device 10 are exposed from the holding apparatus 1. A handle 17 is provided on the front surface 15 of the storage device 10. For example, a user is able to carry the storage device 10 in a suspended state of holding the handle 17 with the rear surface 16 facing downward. The storage device 10 is capable of standing by itself with the rear surface 16 in contact with the ground or the floor surface.

A first terminal 18 is provided on an upper portion of the rear surface 16 of the storage device 10. For example, the first terminal 18 includes a plurality of metal terminals each having a substantially flat plate shape and disposed to be spaced apart from each other in the left-right direction. For example, the first terminal 18 is a receptacle (a female connector) having a recessed shape and extending in the left-right direction.

### <Holding Portion>

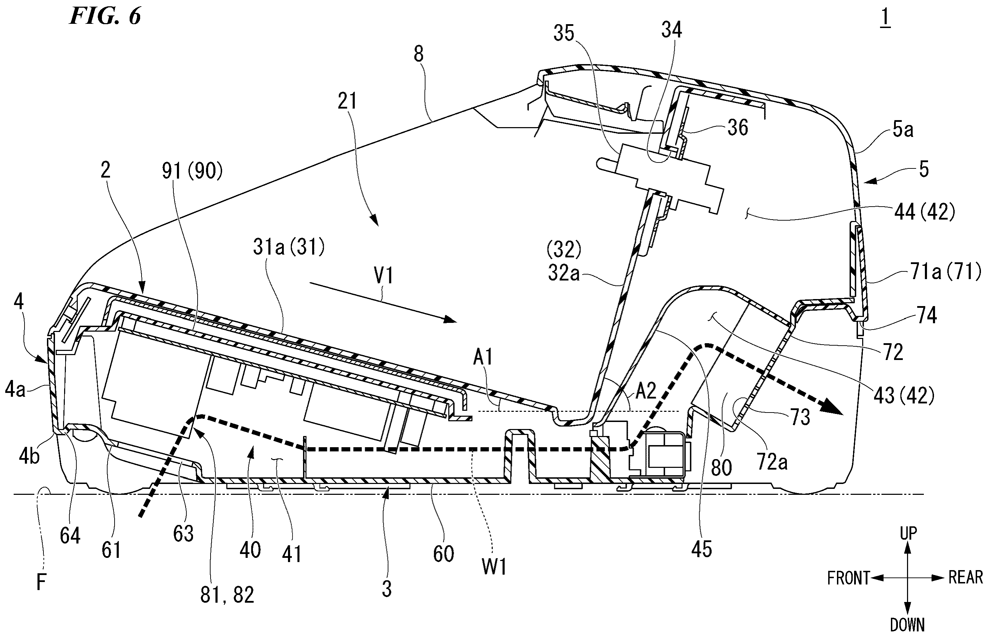

In FIG. 6, the holding portion 2 includes: a first portion 31, which holds the lower surface 12 of the storage device 10 (an example of a first surface that faces a first direction of the storage device 10); and a second portion 32, which holds the rear surface 16 of the storage device 10 (an example of a second surface that faces a second direction that intersects the first direction of the storage device 10). The holding portion 2 has a substantially letter L shape in a cross-sectional view as a whole. The lengths in the left-right direction of the first portion 31 and the second portion 32 are substantially the same as the length in the left-right direction of the accommodation space 21. The length in the front-rear direction of the first portion 31 is substantially the same as the length in the front-rear direction of the accommodation space 21. The length in the up-down direction of the second portion 32 is substantially the same as the maximum length in the up-down direction of the accommodation space 21.

The holding portion 2 is provided so that the storage device 10 is attached and detached in a direction V1 along the first portion 31. The lower surface 12 of the storage device 10 abuts the upper surface 31a of the first portion 31, when the storage device 10 is accommodated. The rear surface 16 of the storage device 10 abuts the front surface 32a of the second portion 32, when the storage device 10 is accommodated. The upper surface 31a of the first portion 31 is constituted to be smooth for the lower surface 12 of the storage device 10 to be smoothly slidable along the upper surface 31a. For example, a plurality of ribs or rails that extend in the front-rear direction and that are parallel to each other are provided to protrude on the upper surface of the first portion 31 so that a contact area between the upper surface 31a of the first portion 31 and the lower surface 12 of the storage device 10 is made small.

The first portion 31 and the second portion 32 extend in directions that obliquely intersect the bottom portion 3. The upper surface of the first portion 31 is inclined downward toward the rear side. The second portion 32 extends rearward and upward from the rear end portion of the first portion 31 at a substantially right angle with respect to the first portion 31.

In a cross-sectional view, a first defined angle A1 denotes a smallest angle among angles defined by the first portion 31 and the bottom portion 3. Specifically, the first defined angle A1 denotes the smallest defined angle among angles defined by the upper surface 31a of the first portion 31 and a surface parallel to the bottom portion main body 60 in the cross-sectional view. In the cross-sectional view, a second defined angle A2 denotes a smallest defined angle among the angles defined by the second portion 32 and the bottom portion 3. Specifically, the second defined angle A2 is the smallest defined angle among angles defined by the front surface 32a of the second portion 32 and a surface parallel to the bottom portion main body 60 in the cross-sectional view. The first defined angle A1 is smaller than the second defined angle A2.

In FIG. 1, a region 33 to which a label is attachable is provided on the front surface 32a of the second portion 32. A through hole 34, which penetrates the second portion 32 in the front-rear direction, is formed in an upper portion of the second portion 32. The through hole 34 extends in the left-right direction to correspond to the position of the first terminal 18 of the storage device 10. A second terminal 35 to be attachable to and detachable from the first terminal 18, which is provided on the storage device 10, is provided on an upper rear surface of the second portion 32.

In FIG. 6, for example, the second terminal 35 is attached to the second portion 32 with a fastening member such as a bolt 37 via a bracket 36. For example, first, the bracket 36 is disposed with a second terminal 35 fixed to the rear surface of the second portion 32. Next, the bolt 37 is fastened to a female screw portion (not illustrated) of the bracket 36 from the outside of the holding apparatus 1 (the front side of the second portion 32). This enables the second terminal 35 to be fixed to the second portion 32 via the bracket 36.

For example, the second terminal 35 includes a plurality of metal terminals each having a substantially flat plate shape and disposed to be spaced apart from each other in the left-right direction. For example, the second terminal 35 is a plug (a male connector) that extends in the left-right direction. The second terminal 35 protrudes forward (specifically, forward and upward) from the through hole 34. In the second terminal 35, a portion that protrudes forward from the through hole 34 is exposed all the time.

For example, the user pushes the storage device 10, which is accommodated in the accommodation space 21, in an arrow V1 direction along the upper surface of the first portion 31. Then, the plug (the second terminal 35) of the holding apparatus 1 is fitted with the first terminal 18 (the receptacle) of the storage device 10. This enables connection between the first terminal 18 and the second terminal 35.

### <Internal Space>

An internal space 40 is formed inside the holding apparatus 1, and the internal space 40 includes: a first space 41, which is defined by the first portion 31 and the bottom portion 3; and a second space 42, which is defined by the second portion 32 and the bottom portion 3, and which communicates with the first space 41.

The first space 41 is formed to be horizontally long. The length in the up-down direction of the first space 41 decreases toward the rear side. The maximum length in the front-rear direction of the first space 41 is longer than the maximum length in the up-down direction of the first space 41.

The second space 42 is formed to be vertically long. The maximum length in the up-down direction of the second space 42 is longer than the maximum length in the up-down direction of the first space 41. The maximum length in the front-rear direction of the second space 42 is shorter than the maximum length in the front-rear direction of the first space 41.

### <Front Portion>

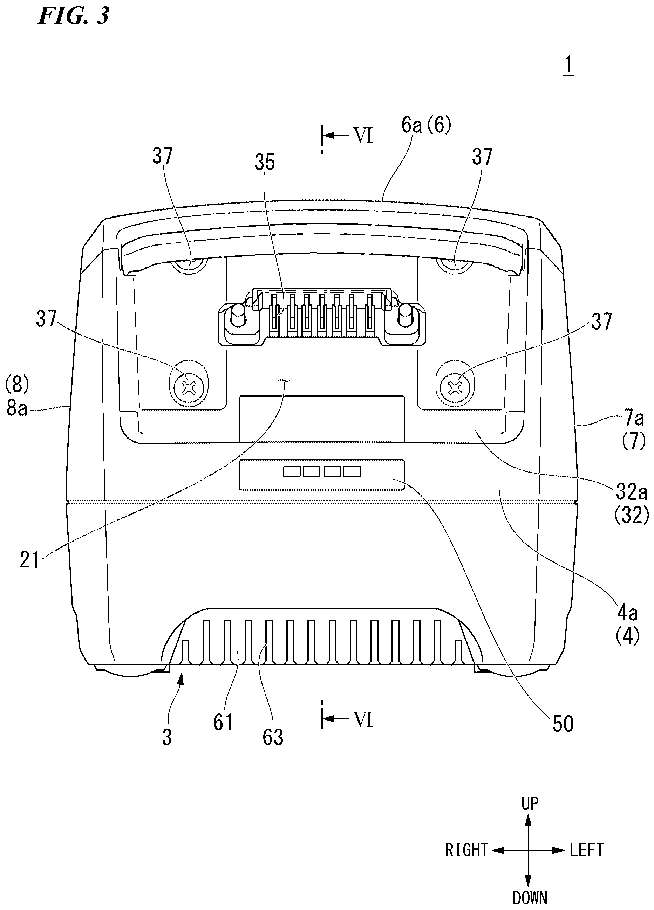

The front portion 4 is disposed to be lower than the holding portion 2, when viewed in the direction V1 along the first portion 31. The front portion 4 includes a front surface 4a, which faces the front side of the holding apparatus 1. A display 50 (see FIG. 3) such as an indicator is provided on the front surface 4a of the front portion 4.

In FIG. 6, the front surface 4a of the front portion 4 is not limited to facing forward in a substantially horizontal direction, and may be a surface that faces obliquely with respect to the horizontal direction. In the example of the drawing, the front surface 4a of the front portion 4 is inclined so that a lower end 4b is positioned on a rear side relative to an upper end of the front portion 4 in the cross-sectional view. The lower end 4b of the front portion 4 is provided at a position higher than the placement surface F. The first space 41 is defined by the front portion 4, in addition to the first portion 31 and the bottom portion 3.

### <Bottom Portion>

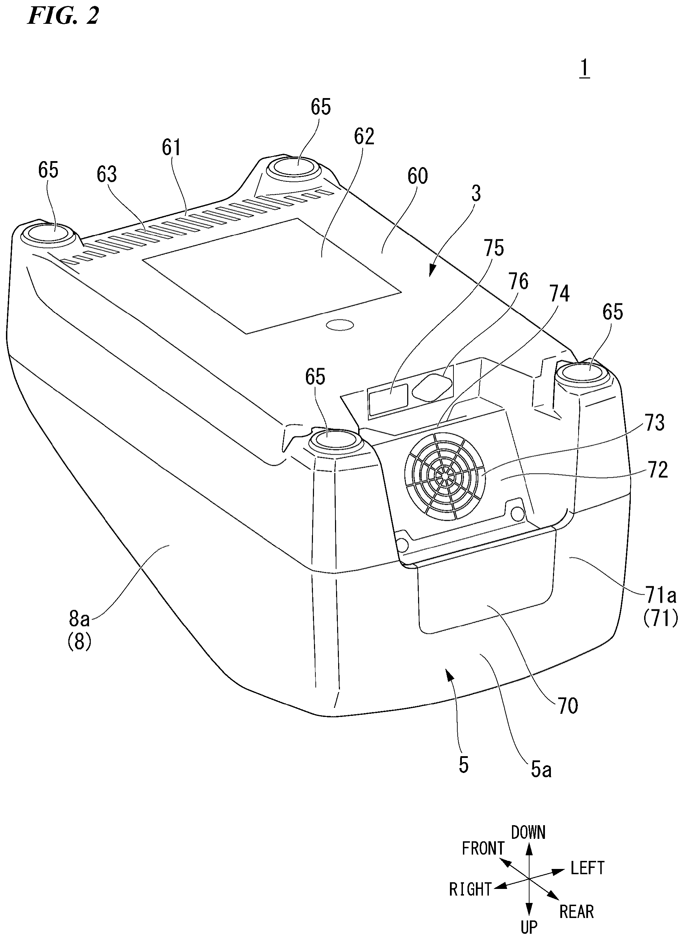

In FIG. 2, the bottom portion 3 includes: a bottom portion main body 60, which is disposed in parallel with the placement surface F when the holding apparatus 1 is placed; and a connection portion 61, which is provided to be connected with a lower end of the front portion 4 and to be spaced apart from the placement surface F.

The bottom portion main body 60 extends along the front-rear direction. For example, a region 62 to which a label is attachable is provided on a lower surface of the bottom portion main body 60.

The connection portion 61 is inclined downward toward the rear side. In the connection portion 61, a first communication hole 63 is formed to allow an external space of the holding apparatus 1 and the first space 41 to communicate with each other. For example, the first communication hole 63 includes a plurality of slit-shaped intake ports that are spaced apart from each other in the left-right direction. The first communication hole 63 is opened to face downward relative to the horizontal direction. The first communication hole 63 is opened to face forward and downward in the cross-sectional view.

The connection portion 61 includes a projection portion 64, which projects downward on a front side relative to the first communication hole 63. The projection portion 64 is provided to be continuous with the lower end 4b of the front portion 4. In the connection portion 61, a portion between the projection portion 64 and the first communication hole 63 is recessed upward.

On the bottom portion main body 60, foot portions 65 (rubber feet), each of which is made of an elastic body such as rubber, are provided. In the example of the drawing, four foot portions 65 in total are respectively provided at four corner portions (four corner portions) of the bottom portion main body 60. Note that the installed number of the foot portions 65 is not limited to the above description number, and can be changed in accordance with a design specification.

### <Rear Portion>

The rear portion 5 is disposed on an opposite side of the second portion 32 with respect to the second space 42. A maintenance lid 70 is provided on the rear portion 5. The rear portion 5 includes the rear surface 5a, which faces the rear side of the holding apparatus 1. The second space 42 is defined by the rear portion 5, in addition to the second portion 32 and the bottom portion 3.

The rear portion 5 includes: a rear upper portion 71 including a rear end surface 71a; and a rear lower portion 72, which is disposed on a lower side than the rear upper portion 71, and which is recessed forward. The rear end surface 71a of the rear upper portion 71 is not limited to facing rearward in a substantially horizontal direction, and may be a surface that faces obliquely with respect to the horizontal direction. In the example of the drawing, the rear end surface 71a of the rear upper portion 71 is inclined so that the lower end of the rear upper portion 71 is positioned on a rear side relative to its upper end in the cross-sectional view.

In the rear lower portion 72, a second communication hole 73 is formed to allow the external space of the holding apparatus 1 and the second space 42 to communicate with each other. For example, the second communication hole 73 includes a plurality of exhaust ports, each of which has an arc shape, and which are disposed to be spaced apart from each other in a radial direction and in a circumferential direction. The second communication hole 73 is opened to face downward relative to the horizontal direction. The second communication hole 73 is opened to face rearward and downward in the cross-sectional view.

The rear lower portion 72 includes a rear projection portion 74, which projects downward on a rear side relative to the second communication hole 73. The rear projection portion 74 is provided to be continuous with the lower end of the rear upper portion 71. In the rear lower portion 72, a portion between the rear projection portion 74 and the second communication hole 73 is recessed upward.

A lower portion of the rear lower portion 72 is recessed forward. For example, a cable connector 75 to which an inter-device communication cable or the like is connectable and a cable jack 76 to which an AC power cable or the like is connectable are provided in a lower portion of the rear lower portion 72. The cable connector 75 and the cable jack 76 are disposed side by side in the left-right direction.

### <Air-Flow Generator>

The holding apparatus 1 includes, in the second space 42, an air-flow generator 80, which promotes the flow of air passing through the first space 41 and the second space 42. For example, the air-flow generator 80 is a cooling fan. In the rear lower portion 72, the air-flow generator 80 is attached to a portion 72a, which faces the second space 42. In the rear lower portion 72, the portion 72a, which faces the second space 42, is inclined downward toward the front side.

### <Partition Portion>

The holding apparatus 1 includes a partition portion 45, which partitions the second space 42 into an air-flow generator disposed space 43 in which the air-flow generator 80 is disposed and an air-flow generator non-disposed space 44 in which the air-flow generator 80 is not disposed. The partition portion 45 extends rearward and upward from the vicinity of the lower end of the second portion 32 in the cross-sectional view. Then, the partition portion 45 is curved upward in the cross-sectional view, and then in the rear lower portion 72, extends rearward and downward toward an upper end of the portion 72a, which faces the second space 42.

The second terminal 35 is disposed in the air-flow generator non-disposed space 44. The second terminal 35 is disposed on an upper side than an upper end of the partition portion 45.

### <Control Device and the like>

The holding apparatus 1 includes, in the first space 41: a power conversion device 81, which is provided to be capable of supplying electric power to and from the storage device 10 held in the holding portion 2; and a control device 82, which controls the power conversion device 81.

For example, the power conversion device 81 is an AC/DC inverter. For example, the power conversion device 81 converts AC power supplied from a power source (for example, system power) into DC power, and supplies the storage device 10 with the DC power.

For example, an AC power source outside the holding apparatus 1 is connected with the power conversion device 81. In this state, when the first terminal 18 of the storage device 10 is connected to the second terminal 35 of the holding apparatus 1, electric power is supplied to the storage device 10 via the power conversion device 81. The storage device 10 is charged, accordingly. Note that it is possible to constitute so that the electric power of the storage device 10 is supplied to the holding apparatus 1, when the first terminal 18 of the storage device 10 is connected to the second terminal 35 of the holding apparatus 1.

Although not illustrated, an electric terminal (a receptacle) to which a plug of an electric instrument, such as an AC power outlet, is connected may be provided in the upper portion 6 of the holding apparatus 1. For example, a DC/AC conversion inverter for converting DC power supplied from the storage device 10 into AC power and supplying the AC power to an electric instrument in connection with such an outlet may be provided inside the holding apparatus 1. In this case, the holding apparatus 1 has a function as a power feeder, in addition to the function as a charger.

### <Reinforcement Portion>

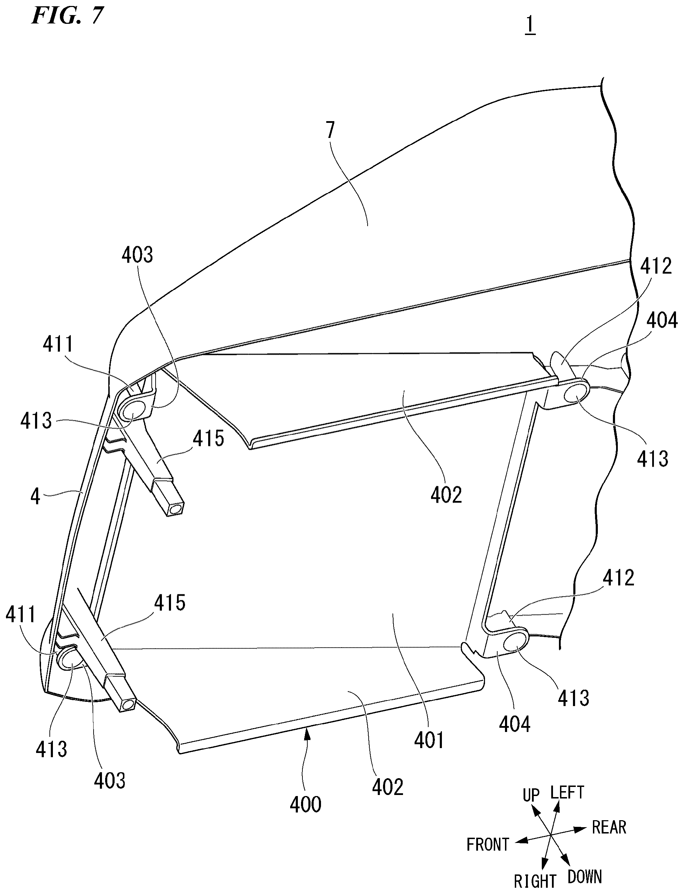

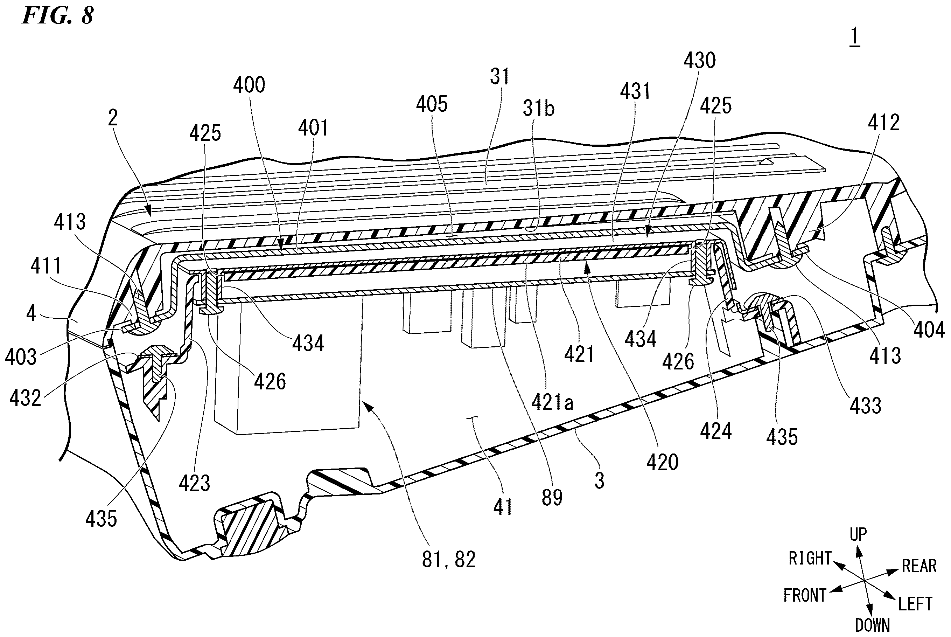

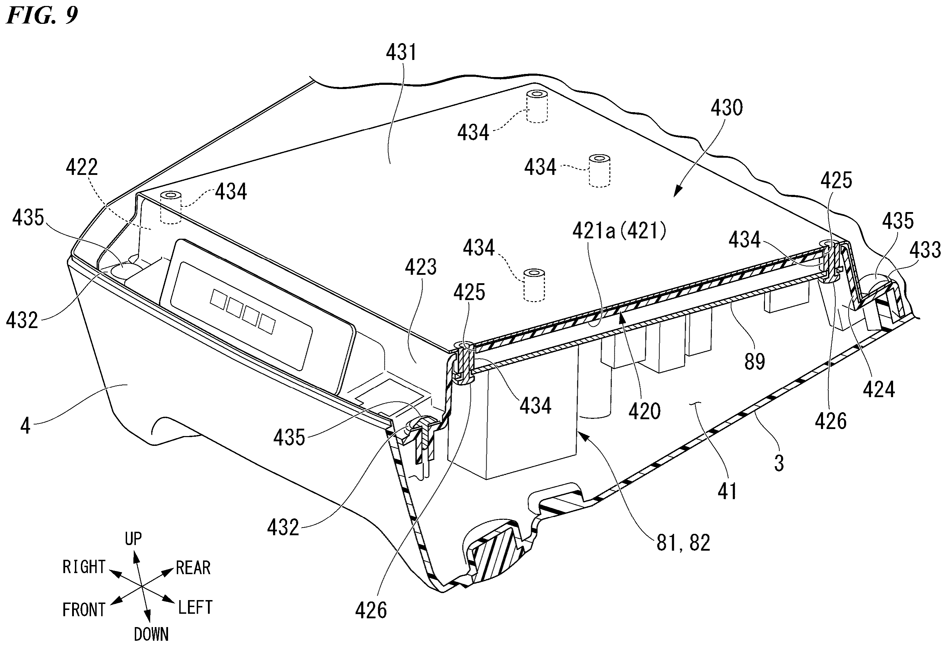

In FIGS. 7 to 9, the holding apparatus 1 includes a reinforcement portion 400, which is constituted of a second material having higher strength and/or rigidity than a first material that constitutes the holding portion 2, at a lower surface 31b of the first portion 31 (a surface located opposite to a surface that faces the storage device 10). Examples of the first material include a resin such as plastic. Examples of the second material include a metal. For example, the reinforcement portion 400 is made up of a metal plate.

For example, the metal plate may be provided on the rear surface of the second portion 32 (the surface on an opposite side of a surface that faces the storage device 10). For example, the metal plate may be provided on both the first portion 31 and the second portion 32. For example, the installed mode of the metal plate can be changed in accordance with a design specification.

The reinforcement portion 400 is fixed to be suspended from a surface of the first portion 31, the surface being located opposite to a surface that faces the storage device 10. The reinforcement portion 400 is disposed to define a space 405 (hereinafter, also referred to as a "gap 405") from the surface 31b of the first portion 31, the surface 31b being located opposite to a surface that faces the storage device 10.

The reinforcement portion 400 includes: a reinforcement surface portion 401, which has a plate shape, and which extends along the first portion 31; a pair of left and right side wall portions 402, which respectively extend downward from left and right side end portions of the reinforcement surface portion 401, and then extend outward in the left-right direction; a pair of left and right front extension portions 403, which respectively extend downward from front left and right end portions of the reinforcement surface portion 401, and then extend forward; and a pair of left and right rear extension portions 404, which respectively extend downward from rear left and right end portions of the reinforcement surface portion 401, and then extend rearward.

An upper surface of the reinforcement surface portion 401 is inclined downward toward the rear. The gap 405 is formed over the entirety between the lower surface 31b of the first portion 31 and the upper surface of the reinforcement surface portion 401. The size (the space in the up-down direction) of the gap 405 between the lower surface 31b of the first portion 31 and the upper surface of the reinforcement surface portion 401 is preferably as small as possible. Accordingly, when the first portion 31 is deflected downward, the first portion 31 hits the reinforcement surface portion 401, so that excessive deformation of the first portion 31 can be suppressed.

The gap 405 may not necessarily be formed over the entirety between the lower surface 31b of the first portion 31 and the upper surface of the reinforcement surface portion 401. For example, the gap 405 may be formed partially between the lower surface 31b of the first portion 31 and the upper surface of the reinforcement surface portion 401. For example, the upper surface of the reinforcement surface portion 401 may abut the lower surface 31b of the first portion 31. For example, the disposed mode of the upper surface of the reinforcement surface portion 401 can be changed in accordance with a design specification.

Left and right outer side surfaces of the side wall portions 402 are shorter in length in the up-down direction toward the rear. Lower end edges of the side wall portions 402 extend along the front-rear direction. For example, the lower end edges of the side wall portions 402 may be formed along an upper surface of the bottom portion 3 of the holding apparatus 1. For example, the lower end edges of the side wall portions 402 may abut the upper surface of the bottom portion 3.

The holding apparatus 1 includes, located opposite to the surface of the first portion 31, the surface facing the storage device 10: a pair of left and right front lower bulge portions 411, which bulge downward at positions respectively corresponding to the front extension portions 403; and a pair of left and right rear lower bulge portions 412, which bulge downward at positions respectively corresponding to the rear extension portions 404. The front extension portion 403 is attached to a lower surface of the front lower bulge portion 411 (the lower surface corresponding to the surface of the first portion 31, the surface being located opposite to a surface that faces the storage device 10) from below with a fastening member such as a bolt 413. The rear extension portion 404 is attached to a lower surface of the rear lower bulge portion 412 (the lower surface corresponding to the surface of the first portion 31, the surface being located opposite to a surface that faces the storage device 10) from below with a fastening member such as a bolt 413.

In the example of the drawing, the reinforcement portion 400 is fixed to the first portion 31 at four positions in total including the pair of left and right front extension portions 403 and the pair of left and right rear extension portions 404. Note that the number of fixing positions of the reinforcement portion 400 is not limited to the above description, may be equal to or smaller than three, or may be equal to or larger than five. For example, the fixing mode of the reinforcement portion 400 can be changed in accordance with a design specification.

The holding apparatus 1 includes a pair of left and right front column portions 415, which respectively extend downward from left and right inner side portions of the front lower bulge portions 411. Upper portions of the front column portions 415 are connected with a rear wall of the front portion 4 of the holding apparatus 1. For example, lower ends of the front column portions 415 may abut the upper surface of the bottom portion 3 of the holding apparatus 1. For example, the lower ends of the front column portions 415 may be fixed to the upper surface of the bottom portion 3.

### <Support Portion>

The holding apparatus 1 includes a support portion 420, which is provided to extend along the reinforcement portion 400. The power conversion device 81 and the control device 82 are fixed to a downward-facing surface 421a of the support portion 420. The support portion 420 includes: a support surface portion 421, which has a flat plate shape, and which extends along the reinforcement surface portion 401; a pair of left and right side support wall portions 422, which respectively extend downward from left and right side end portions of the support surface portion 421; a front support wall portion 423, which extends downward from a front end portion of the support surface portion 421; and a rear support wall portion 424, which extends downward from a rear end portion of the support surface portion 421.

Although not illustrated, the side support wall portions 422 and the rear support wall portion 424 are each attached to the bottom portion 3 of the holding apparatus 1 from above with a fastening member such as a bolt. For example, the support portion 420 is fixed to the bottom portion 3 at four positions in total including the pair of left and right side support wall portions 422 and outer end portions in the left-right direction of the rear support wall portion 424. Note that the fixing mode of the support portion 420 is not limited to the above description, and can be changed in accordance with a design specification.

### <Shield Portion>

The holding apparatus 1 includes, between the support portion 420 and the holding portion 2, a shield portion 430, which is constituted of a fourth material that is lower in electromagnetic wave transmission property than the third material that constitutes the support portion 420. Examples of the third material include a resin such as plastic. Examples of the fourth material include a metal. For example, the shield portion 430 is made up of a metal plate.

The shield portion 430 includes: a shield surface portion 431, which has a flat plate shape, and which extends along the support surface portion 421; a pair of left and right front shield extension portions 432, which respectively extend forward and downward from front left and right end portions of the shield surface portion 431, and then extend inward in the left-right direction; a pair of left and right rear shield extension portions 433, which respectively extend downward from rear left and right end portions of the shield surface portion 431, and then extend rearward; and a plurality of attachment boss portions 434, which protrude downward from a lower surface of the shield surface portion 431.

The shield surface portion 431 covers the power conversion device 81 and the control device 82 from above through the support surface portion 421. The power conversion device 81 and the control device 82 include a circuit board 89, which has a plate shape, and which extends along the support surface portion 421. For example, the outer shape of the shield surface portion 431 has a size equal to or larger than the outer shape of the circuit board 89 in a top view. Note that the outer shape of the shield surface portion 431 is not limited to the above description, and can be changed in accordance with a design specification.

The front shield extension portions 432 are respectively attached to the upper surfaces of the left and right outer wall portions of the front support wall portion 423 from above with fastening members such as bolts 435. The rear shield extension portions 433 are respectively attached to the upper surfaces of the left and right outer wall portions of the rear support wall portion 424 from above with fastening members such as bolts 435.

For example, the shield portion 430 is fixed to the support portion 420 at four positions in total including the pair of left and right front shield extension portions 432 and the pair of left and right rear shield extension portions 433. Note that the number of fixing positions of the shield portion 430 is not limited to the above description, may be equal to or smaller than three, or may be equal to or larger than five. For example, the fixing mode of the shield portion 430 can be changed in accordance with a design specification.

A plurality of through holes 425 are formed in the support surface portion 421 at positions respectively corresponding to the attachment boss portions 434. The attachment boss portions 434 respectively project downward from the support surface portion 421 through the through holes 425. The circuit board 89 is attached to the attachment boss portions 434, which project downward from the support surface portion 421, from below with fastening members such as bolts 426. The power conversion device 81 and the control device 82 are fixed to the attachment boss portions 434 of the shield portion 430 through the support surface portion 421. Accordingly, the power conversion device 81 and the control device 82 are fixed to be suspended from the downward-facing surface 421a of the support portion 420.

In the example of the drawing, the power conversion device 81 and the control device 82 are fixed to the attachment boss portions 434 at six positions in total including four positions of four corner portions of the circuit board 89, one position of a rear portion of the circuit board 89, and one position of a left portion of the circuit board 89. Note that the number of fixing positions of the circuit board 89 is not limited to the above description, may be equal to or smaller than five, or may be equal to or larger than seven. For example, the fixing mode of the circuit board 89 can be changed in accordance with a design specification.

The holding apparatus 1 includes the reinforcement portion 400, the support portion 420, and the shield portion 430 in the first space 41. The power conversion device 81 and the control device 82 are fixed to the support surface portion 421 to be suspended from above.

### <Flow of Air in Internal Space of Holding Apparatus>

In FIG. 6, for example, when the cooling fan as the air-flow generator 80 is driven, cooling air flows in the internal space 40 along an arrow W1 direction. For example, by driving the cooling fan, air is forcibly taken into the first space 41 from the external space of the holding apparatus 1 through the first communication hole 63. The air taken into the first space 41 eliminates heat generated by the control device 82 and the like, and then flows into the second space 42 (for example, the air-flow generator disposed space 43). The air that has flowed into the second space 42 is discharged to the external space of the holding apparatus 1 through the second communication hole 73.

Note that the air-flowing direction of the cooling fan (the direction in which the air flows) may be an opposite direction to the arrow W1 direction in the drawing. For example, the air-flow generator 80 in an embodiment is a fan installed for the purpose of cooling, but may be a fan installed for the purpose of heating.

### <Operation and Effects>

As described heretofore, the holding apparatus 1 in the above embodiment includes the holding portion 2, which includes the first portion 31 for holding the lower surface 12 of the storage device 10; and the second portion 32 for holding the rear surface 16 of the storage device 10, and which holds the storage device 10 to be detachable. The holding apparatus 1 includes the reinforcement portion 400, which is constituted of the second material having higher strength and/or rigidity than the first material that constitutes the holding portion 2, at the surface 31b of the first portion 31, the surface 31b being located opposite to the surface that faces the storage device 10.

According to this constitution, the reinforcement portion 400, which is constituted of the second material having higher strength and/or rigidity than the first material that constitutes the holding portion 2, is provided at the surface 31b of the first portion 31, the surface 31b being located opposite to the surface that faces the storage device 10, so that the strength and/or rigidity of the first portion 31, which holds the lower surface 12 of the storage device 10, can be enhanced. Therefore, the durability against the load applied when the storage device 10 is inserted can be enhanced.

In the above embodiment, the reinforcement portion 400 is fixed to the surface 31b of the first portion 31, the surface 31b being located opposite to the surface that faces the storage device 10.

According to this constitution, the strength and/or rigidity of the first portion 31 can be enhanced also at the fixing part of the reinforcement portion 400 to the surface 31b of the first portion 31, the surface 31b being located opposite to the surface that faces the storage device 10. Therefore, the durability against the load applied when the storage device 10 is inserted can be further enhanced.

In the above embodiment, the holding apparatus 1 includes: the power conversion device 81, which is provided to be capable of supplying electric power to and from the storage device 10 held by the holding portion 2; the control device 82, which controls the power conversion device 81; and the support portion 420, which is provided to extend along the reinforcement portion 400. The power conversion device 81 and the control device 82 are fixed to a downward-facing surface 421a of the support portion 420.

According to this constitution, the strength and/or rigidity of the first portion 31 can be enhanced by a layered structure of the reinforcement portion 400 and the support portion 420. Therefore, the durability against the load applied when the storage device 10 is inserted can be further enhanced. In addition, the power conversion device 81 and the control device 82 are fixed to the downward-facing surface 421a of the support portion 420, thereby eliminating the need to provide a fixing part on the bottom portion 3 of the holding apparatus 1. Therefore, the degree of freedom in designing the bottom portion 3 of the holding apparatus 1 can be improved.

In the above embodiment, the holding apparatus 1 includes, between the support portion 420 and the holding portion 2, the shield portion 430, which is constituted of the fourth material having lower electromagnetic wave transmission property than the third material that constitutes the support portion 420.

According to this constitution, the strength and/or rigidity of the first portion 31 can be enhanced by a layered structure of the reinforcement portion 400, the support portion 420, and the shield portion 430. Therefore, the durability against the load applied when the storage device 10 is inserted can be further enhanced. In addition, the shield portion 430 is capable of suppressing diffusion of the electromagnetic waves generated from the power conversion device 81 and/or the control device 82 to the outside of the holding apparatus 1.

In the above embodiment, the reinforcement portion 400 is disposed to define the space 405 from the surface 31b of the first portion 31, the surface 31b being located opposite to the surface that faces the storage device 10.

According to this constitution, it becomes possible to suppress deformation of the first portion 31 by equal to or larger than the space 405.

In addition, as compared with a case where the reinforcement portion 400 is disposed in contact with the surface 31b of the first portion 31, the surface 31b being located opposite to the surface that faces the storage device 10 from the beginning, it becomes possible to suppress the generation of contact sound between two members, vibrations of the reinforcement portion 400, or the like, when using normally (the load smaller than a predetermined one).

For example, in a case where the holding portion 2 is made of a resin, there is a high possibility that the first portion 31 is deformed due to a temperature rise of the surrounding air caused by heat generation of the control device 82. On the other hand, in the present embodiment, the reinforcement portion 400, which is made of a metal, is provided on the surface 31b of the first portion 31, the surface 31b being located opposite to the surface that faces the storage device 10. Therefore, even when the temperature rise of the surrounding air is caused by the heat generation of the control device 82, it becomes possible to suppress deformation of the first portion 31.

For example, in a case where the reinforcement portion has a structure in which a plurality of metal parts are joined together by welding, the structure becomes complicated, and the manufacturing cost may be increased. On the other hand, in the present embodiment, the reinforcement portion 400 has a simple structure made up of a metal plate. Therefore, the cost of the reinforcement portion 400 can be reduced.

For example, in a case where the reinforcement portion has a cylindrical shape that extends in the left-right direction, there is a high possibility that a part that is not supported by the reinforcement portion is generated in the first portion 31. On the other hand, in the present embodiment, the reinforcement portion 400 includes the reinforcement surface portion 401, which has a plate shape, and which extends along the first portion 31, so that the first portion 31 can be supported in a wider range. Therefore, the durability against the load applied when the storage device 10 is inserted can be more effectively enhanced. In addition, even when the first portion 31 is deformed or damaged, the reinforcement surface portion 401 suppresses contact of a damaged portion or the like with the control device 82. Therefore, it becomes possible to suppress mechanical stress applied to the control device 82. In addition, even when the first portion 31 is damaged and a hole is opened, the reinforcement surface portion 401 suppresses entry of rainwater or the like. Therefore, a short-circuit failure or the like of the electric circuit of the control device 82 can be suppressed.

For example, in a case where the power conversion device 81 and the control device 82 are fixed to the bottom portion 3, it is necessary to provide a fixing part on the bottom portion 3. In this case, it is difficult to form the communication holes 63 and 73 or the like in the bottom portion 3. On the other hand, in the present embodiment, the power conversion device 81 and the control device 82 are fixed to be suspended from the downward-facing surface 421a, which faces downward the support portion 420, so that the communication holes 63 and 73 (intake port and/or exhaust port), which are poor in designability, and which may generate noise, can be disposed to face downward. Therefore, the degree of freedom in disposing a passage through which the cooling air flows can be improved.

### <Modifications>

In the above embodiment, the description has been made with regard to an example in which the reinforcement portion is fixed to the surface of the first portion, the surface being located opposite to the surface that faces the storage device, but the present invention is not limited to this. For example, the reinforcement portion may be fixed to the surface of the first portion that faces the storage device. For example, the reinforcement portion may be fixed to a part different from the first portion, such as the front portion and/or the bottom portion of the holding apparatus. For example, the fixing mode of the reinforcement portion can be changed in accordance with a design specification.

In the above embodiment, the description has been made with regard to an example in which the holding apparatus includes: the power conversion device provided to be capable of supplying electric power to and from the storage device held by the holding portion and/or the control device that controls the power conversion device; and the support portion provided to extend along the reinforcement portion, but the present invention is not limited to this. For example, the holding apparatus may not necessarily include the power conversion device and/or the control device or the support portion. For example, the support portion may not necessarily be provided to extend along the reinforcement portion. For example, the installed modes of the power conversion device and/or the control device and the support portion can be changed in accordance with a design specification.

In the above embodiment, the description has been made with regard to an example in which the power conversion device and/or the control device is fixed to the downward-facing surface of the support portion, but the present invention is not limited to this. For example, the power conversion device and/or the control device may be fixed to an upward-facing surface of the support portion. For example, the power conversion device and/or the control device may be fixed to a part different from the support portion, such as the bottom portion of the holding apparatus. For example, the fixed mode of the power conversion device and/or the control device can be changed in accordance with a design specification.

In the above embodiment, the description has been made with regard to an example in which the holding apparatus includes, between the support portion and the holding portion, the shield portion constituted of the fourth material having lower electromagnetic wave transmission property than the third material that constitutes the support portion, but the present invention is not limited to this. For example, the holding apparatus may not necessarily include the shield portion. For example, the shield portion may not necessarily be constituted of the fourth material having lower electromagnetic wave transmission property than the third material that constitutes the support portion. For example, the holding apparatus may include another reinforcement portion (a second reinforcement portion) different from the above reinforcement portion between the support portion and the holding portion. For example, the installed mode of the shield portion can be changed in accordance with a design specification.

In the above embodiment, the description has been made with regard to an example in which the reinforcement portion is disposed to define a space from the surface of the first portion, the surface being located opposite to the surface that faces the storage device, but the present invention is not limited to this. For example, the reinforcement portion may be disposed in contact with the surface of the first portion, the surface being located opposite to the surface that faces the storage device from the beginning. For example, the disposed mode of the reinforcement portion on the surface of the first portion, the surface being located opposite to the surface that faces the storage device, can be changed in accordance with a design specification.

In the above embodiment, the description has been made with regard to an example in which the first portion and the second portion extend in directions that obliquely intersect the bottom portion, but the present invention is not limited to this. For example, one of the first portion and the second portion may extend in parallel with the bottom portion. In this case, it is possible to take in and out the storage device horizontally along the first portion or the second portion. For example, the disposed mode of the first portion and the second portion can be changed in accordance with a design specification.

In the above embodiment, the description has been made with regard to an example in which the first defined angle, which is the smallest defined angle among the angles defined by the first portion and the bottom portion, is smaller than the second defined angle, which is the smallest defined angle among the angles defined by the second portion and the bottom portion, but the present invention is not limited to this. For example, the first defined angle may be an angle equal to or larger than the second defined angle. For example, the magnitude relationship between the first defined angle and the second defined angle can be changed in accordance with a design specification.

In the above embodiment, the description has been made with regard to an example in which the plug (the second terminal) to be connectable with the receptacle (the first terminal) of the storage device is provided on the holding apparatus, but the present invention is not limited to this. For example, the receptacle may be provided on the holding apparatus, and in addition, the plug to be fitted with the receptacle may be provided on the storage device. For example, the constitution mode of the first terminal and the second terminal can be changed in accordance with a design specification.

In the above embodiment, the description has been made with regard to an example in which the holding apparatus includes one holding portion that holds a single storage device, but the present invention is not limited to this. For example, the holding apparatus may include a plurality of holding portions that are constituted to be capable of simultaneously holding a plurality of storage devices. For example, the plurality of holding apparatuses may be disposed to be aligned in at least one of the left-right direction and the up-down direction, and may hold a plurality of storage devices simultaneously. For example, the holding mode that the holding apparatus holds the storage device can be changed in accordance with a design specification.

In the above embodiment, the description has been made with regard to, as an example of the holding apparatus, a charger that supplies the battery with electric power from the outside, but the holding apparatus is not limited to this. For example, the holding apparatus may be a power feeder that supplies electric power of the battery to the outside. For example, the holding apparatus may be a power feeder without a charging function. For example, the holding apparatus may be applied to a battery mount portion of an electric power utilization apparatus that utilizes the electric power of the battery. For example, the application mode of the holding apparatus can be changed in accordance with a design specification.

In the above embodiment, the description has been made with regard to, as an example of the holding apparatus, a storage device holding apparatus that holds a storage device (a secondary battery) such as a battery as the storage device to be detachable, but the holding apparatus is not limited to this. For example, the holding apparatus may hold a capacitor as the storage device. For example, the storage device is not limited to the battery, and may be any other electric power storage device such as the capacitor. For example, the storage device to which the present invention is applied can be changed in accordance with a design specification.

Heretofore, the modes for carrying out the present invention have been described using the embodiments, but the present invention is not limited to the embodiments described above, and various modifications and substitutions can be made without departing from the gist of the present invention.

### REFERENCE SIGNS LIST

1 Holding apparatus
2 Holding portion
10 Storage device
12 Lower surface of storage device (first surface that faces first direction of storage device)
16 Rear surface of storage device (second surface that faces second direction that intersects first direction of storage device)
31 First portion
31b Lower surface of first portion (surface of first portion, the surface being located opposite to a surface that faces storage device)
32 Second portion
81 Power conversion device
82 Control device
400 Reinforcement portion
405 Gap (space)
420 Support portion
421a Lower surface of support surface portion (downward-facing surface of support portion)
430 Shield portion

## Claims

1. A holding apparatus comprising a holding portion, the holding portion including a first portion and a second portion, the first portion holding a first surface of a storage device, the first surface facing a first direction, the second portion holding a second surface of the storage device, the second surface facing a second direction which intersects the first direction, the holding portion holding the storage device to be detachable, wherein
the holding apparatus comprises a reinforcement portion at a surface of the first portion, the surface being located opposite to a surface which faces the storage device, the reinforcement portion being constituted of a second material having higher strength and/or rigidity than a first material which constitutes the holding portion.

2. The holding apparatus according to claim 1, wherein
the reinforcement portion is fixed to the surface of the first portion, the surface being located opposite side.

3. The holding apparatus according to claim 1 or 2, further comprising:
a power conversion device and/or a control device, the power conversion device being provided to be capable of supplying electric power to and from the storage device held by the holding portion, the control device controlling the power conversion device; and
a support portion provided to extend along the reinforcement portion, wherein
the power conversion device and/or the control device is fixed to a downward-facing surface of the support portion.

4. The holding apparatus according to claim 3, further comprising
a shield portion between the support portion and the holding portion, the shield portion being constituted of a fourth material having lower electromagnetic wave transmission property than a third material which constitutes the support portion.

5. The holding apparatus according to one of claims 1 to 4, wherein
the reinforcement portion is disposed to define a space from the surface of the first portion, the surface being located opposite side.
